# EUROPEAN PATENT APPLICATION

(11) **EP 3 952 103 A1**
(43) Date of publication of application: **09.02.2022**
(21) Application number: 19920791.1
(22) Date of filing: 28.03.2019
(51) Int. Cl.: H02P 27/06

(54) **MOTOR DRIVE DEVICE, ELECTRIC VACUUM CLEANER, AND HAND DRYER**

(71) Applicant: MITSUBISHI ELECTRIC CORPORATION, Chiyoda-ku Tokyo 100-8310 (JP)
(72) Inventor: HATAKEYAMA, Kazunori, Tokyo 100-8310 (JP); TAKAYAMA, Yuji, Tokyo 100-8310 (JP); MATSUO, Haruka, Tokyo 100-8310 (JP)
(74) Representative: Mewburn Ellis LLP
(86) International application number: PCT/JP2019/013889
(87) International publication number: WO 2020/194753

(57) **Abstract**

A motor driving apparatus (2) includes: an inverter (11) including switching elements (51 to 54), converting a direct-current power supplied from a battery (10) into an alternating-current power, and supplying the alternating-current power to a single-phase motor (12); a first current detection unit (55a, 22) detecting current flowing through a leg (5A) including a switching element (51) and a switching element (52) connected in series to each other; a second current detection unit (55b, 22) detecting current flowing through a leg (5B) including a switching element (53) and a switching element (54) connected in series to each other; and a control unit (25) controlling the switching elements (51 to 54) such that a first time period and a second time period are continuous, a non-pulse current flowing through a detector (55a) of the first current detection unit during the first time period, a non-pulse current flowing through a detector (55b) of the second current detection unit during the second time period.

## Description

### Field

The present invention relates to a motor driving apparatus for driving a single-phase motor, and to a vacuum cleaner and a hand drying machine including the same.

### Background

Prior art discloses that an inverter for driving a single-phase motor includes a shunt resistor as a current detection means. Such a shunt resistor is provided between the connection point of two lower switching elements of the inverter and a negative terminal of a direct-current power supply in order to detect the motor current flowing from the inverter to the single-phase motor.

### Citation List

### Patent Literature

Patent Literature 1: Japanese Patent Application Laid-open No. 2017-200433

### Summary

### Technical Problem

Unfortunately, the configuration disclosed in Patent Literature 1 poses a problem of failure to detect the motor current during the freewheeling time periods in which the two lower switching elements are on at the same time or the two upper switching elements are on at the same time. That is, the problem with Patent Literature 1 is that one period of the motor current includes an undetectable time period during which the motor current cannot be detected, depending on the switching state of the switching elements provided in the inverter.

The present invention has been made in view of the above, and an object thereof is to obtain a motor driving apparatus capable of ensuring that there is no undetectable time period in one period of the motor current to reliably detect the motor current.

### Solution to Problem

In order to solve the above-mentioned problems and achieve the object, a motor driving apparatus according to the present invention includes an inverter, a first current detection unit, a second current detection unit, and a control unit. The inverter includes a first leg and a second leg, the first leg including a first switching element of an upper arm and a second switching element of a lower arm connected in series to each other, the second leg including a third switching element of the upper arm and a fourth switching element of the lower arm connected in series to each other. The first leg and the second leg are connected in parallel to a direct-current power supply. The inverter converts a direct-current power supplied from the direct-current power supply into an alternating-current power and supplies the alternating-current power to a single-phase motor. The first current detection unit detects current flowing through the first leg. The second current detection unit detects current flowing through the second leg. The control unit controls the first to fourth switching elements such that a first time period and a second time period are continuous, a non-pulse current flowing through a detector of the first current detection unit during the first time period, a non-pulse current flowing through a detector of the second current detection unit during the second time period.

### Advantageous Effects of Invention

The motor driving apparatus according to the present invention can achieve the effect of ensuring that there is no undetectable time period in one cycle of the motor current to reliably detect the motor current.

### Brief Description of Drawings

FIG. 1 is a diagram illustrating the configuration of a motor driving system including a motor driving apparatus according to an embodiment.
FIG. 2 is a circuit diagram illustrating the inverter illustrated in FIG. 1.
FIG. 3 is a block diagram illustrating a functional part that generates pulse width modulation (PWM) signals among the functional parts of the control unit illustrated in FIG. 1.
FIG. 4 is a block diagram illustrating an example of the carrier comparison unit illustrated in FIG. 3.
FIG. 5 is a time chart illustrating examples of the main waveforms in the carrier comparison unit illustrated in FIG. 4.
FIG. 6 is a block diagram illustrating another example of the carrier comparison unit illustrated in FIG. 3.
FIG. 7 is a time chart illustrating examples of the main waveforms in the carrier comparison unit illustrated in FIG. 6.
FIG. 8 is a block diagram illustrating a functional configuration for calculating a lead angle phase that is input to the carrier comparison units illustrated in FIGS. 4 and 6.
FIG. 9 is a diagram illustrating an exemplary method for calculating a lead angle phase according to an embodiment.
FIG. 10 is a time chart used to explain the relationship between the voltage command and the lead angle phase illustrated in FIGS. 4 and 6.
FIG. 11 is a diagram of FIG. 2 illustrating one of the current paths through which power is supplied from the battery to the single-phase motor.
FIG. 12 is a diagram of FIG. 2 illustrating another one of the current paths through which power is supplied from the battery to the single-phase motor.
FIG. 13 is a diagram of FIG. 2 illustrating one of the current paths for the flywheel operation of the inverter.
FIG. 14 is a diagram of FIG. 2 illustrating another one of the current paths for the flywheel operation of the inverter.
FIG. 15 is a diagram based on FIG. 2 illustrating one of the current paths through which the regenerative energy of the single-phase motor is supplied to the battery.
FIG. 16 is a diagram based on FIG. 2 illustrating another one of the current paths through which the regenerative energy of the single-phase motor is supplied to the battery.
FIG. 17 is a diagram illustrating an exemplary configuration of the current detection unit illustrated in FIG. 1.
FIG. 18 is a diagram illustrating the configuration of a modification of the current detection unit illustrated in FIG. 1.
FIG. 19 is a diagram illustrating various waveforms in the case that the inverter is operated in the one-sided PWM mode that can eliminate the operation state of FIG. 13.
FIG. 20 is a flowchart illustrating a current detection operation according to an embodiment.
FIG. 21 is a diagram illustrating the configuration of a vacuum cleaner including a motor driving apparatus according to an embodiment.
FIG. 22 is a diagram illustrating the configuration of a hand drying machine including a motor driving apparatus according to an embodiment.

### Description of Embodiments

Hereinafter, a motor driving apparatus, a vacuum cleaner, and a hand drying machine according to an embodiment of the present invention will be described in detail with reference to the accompanying drawings. The present invention is not limited to the following embodiment. In the following description, electrical connection and physical connection are not distinguished, and are simply referred to as "connection".

### Embodiment

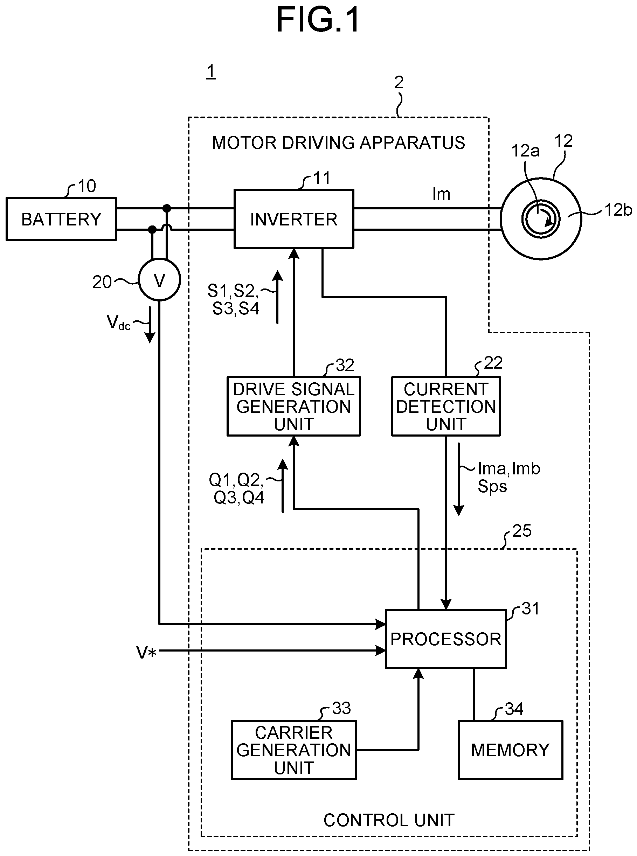

FIG. 1 is a diagram illustrating the configuration of a motor driving system 1 including a motor driving apparatus 2 according to an embodiment. The motor driving system 1 illustrated in FIG. 1 includes a single-phase motor 12, the motor driving apparatus 2, a battery 10, and a voltage sensor 20.

The motor driving apparatus 2 supplies alternating-current power to the single-phase motor 12 to drive the single-phase motor 12. The battery 10 is a direct-current power supply that supplies direct-current power to the motor driving apparatus 2. The voltage sensor 20 detects a direct-current voltage V_{dc} output from the battery 10 to the motor driving apparatus 2.

The single-phase motor 12 is used as a rotary electric machine for rotating an electric blower (not illustrated). The single-phase motor 12 and the electric blower are installed on devices such as vacuum cleaners and hand drying machines.

In the present embodiment, the voltage sensor 20 detects the direct-current voltage V_{dc}, but the detection target of the voltage sensor 20 is not limited to the direct-current voltage V_{dc} output from the battery 10. The detection target of the voltage sensor 20 may be inverter output voltage, i.e. alternating-current voltage output from an inverter 11. The "inverter output voltage" is the output voltage of the motor driving apparatus 2, and is synonymous with the "motor applied voltage" described later.

The motor driving apparatus 2 includes the inverter 11, a current detection unit 22, a control unit 25, and a drive signal generation unit 32. The inverter 11 drives the single-phase motor 12 by converting the direct-current power supplied from the battery 10 into alternating-current power and supplying the alternating-current power to the single-phase motor 12. Note that the inverter 11 is exemplified by a single-phase inverter, but may be any that is capable of driving the single-phase motor 12. In addition, although not illustrated in FIG. 1, a capacitor for voltage stabilization may be inserted between the battery 10 and the inverter 11.

The current detection unit 22 generates and outputs two current signals Ima and Imb for restoring a motor current Im, and a protection signal Sps. Although the current signals Ima and Imb are described as current signals, voltage signals having voltage values obtained through conversion may be used.

The control unit 25 receives input of a voltage amplitude command V*, the direct-current voltage V_{dc} detected by the voltage sensor 20, the current signals Ima and Imb detected by the current detection unit 22, and the protection signal Sps. The voltage amplitude command V* is an amplitude value of a voltage command Vₘ described later. The control unit 25 generates PWM signals Q1, Q2, Q3, and Q4 (hereinafter denoted by "Q1 to Q4") on the basis of the voltage amplitude command V* and the direct-current voltage V_{dc}. The inverter output voltage is controlled by the PWM signals Q1 to Q4, and the desired voltage is applied to the single-phase motor 12. In addition, the control unit 25 generates, on the basis of the protection signal Sps, the PWM signals Q1 to Q4 for stopping the operation of the switching elements of the inverter 11. The PWM signals Q1 to Q4 cause the inverter 11 to stop operating, and the power supply to the single-phase motor 12 is cut off.

The drive signal generation unit 32 converts the PWM signals Q1 to Q4 output from the control unit 25, into drive signals S1, S2, S3, and S4 for driving the inverter 11, and outputs the drive signals S1, S2, S3, and S4 to the inverter 11.

The control unit 25 includes a processor 31, a carrier generation unit 33, and a memory 34. The processor 31 generates the above-mentioned PWM signals Q1 to Q4. The processor 31 performs computation processing related to lead angle control in addition to computation processing related to PWM control. A function of each of a carrier comparison unit 38, a rotation speed calculation unit 42, and a lead angle phase calculation unit 44, which will be described later, is implemented by the processor 31. The processor 31 may be what is called a central processing unit (CPU), a microprocessor, a microcontroller, a microcomputer, or a digital signal processor (DSP).

The memory 34 stores a program that is read by the processor 31. The memory 34 is used as a work area when the processor 31 performs computation processing. The memory 34 is typically a non-volatile or volatile semiconductor memory such as a random access memory (RAM), a flash memory, an erasable programmable ROM (EPROM), or an electrically EPROM (EEPROM, registered trademark). Details of the configuration of the carrier generation unit 33 will be described later.

An example of the single-phase motor 12 is a brushless motor. In the case where the single-phase motor 12 is a brushless motor, a plurality of permanent magnets (not illustrated) are arranged in the circumferential direction on a rotor 12a of the single-phase motor 12. These plurality of permanent magnets are disposed such that the magnetizing directions are alternately reversed in the circumferential direction, and form a plurality of magnetic poles on the rotor 12a. A winding (not illustrated) is wound around a stator 12b of the single-phase motor 12. The motor current flows through the winding. Note that the present embodiment is based on the assumption that the number of magnetic poles of the rotor 12a is four, but the number of magnetic poles may be other than four.

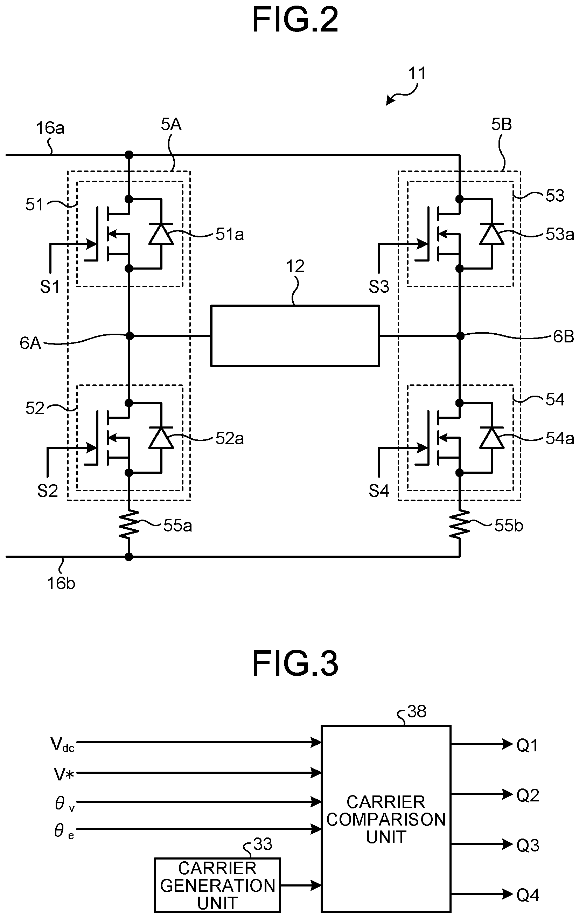

FIG. 2 is a circuit diagram illustrating the inverter 11 illustrated in FIG. 1. The inverter 11 includes a plurality of switching elements 51, 52, 53, and 54 (hereinafter denoted by "51 to 54") that are bridge-connected.

The switching elements 51 and 52 constitute a leg 5A, which is the first leg. The leg 5A is a series circuit in which the switching element 51, which is the first switching element, and the switching element 52, which is the second switching element, are connected in series to each other.

The switching elements 53 and 54 constitute a leg 5B, which is the second leg. The leg 5B is a series circuit in which the switching element 53, which is the third switching element, and the switching element 54, which is the fourth switching element, are connected in series to each other.

The legs 5A and 5B are connected in parallel to each other between a direct-current bus 16a on the high potential side and a direct-current bus 16b on the low potential side. Thus, the legs 5A and 5B are connected in parallel to the two ends of the battery 10.

The switching elements 51 and 53 are located on the high potential side, and the switching elements 52 and 54 are located on the low potential side. Generally, in an inverter circuit, the high potential side is referred to as an "upper arm" and the low potential side is referred to as a "lower arm". Thus, the switching element 51 of the leg 5A may be referred to as the "first switching element of the upper arm", and the switching element 52 of the leg 5A may be referred to as the "second switching element of the lower arm". Similarly, the switching element 53 of the leg 5B may be referred to as the "third switching element of the upper arm", and the switching element 54 of the leg 5B may be referred to as the "fourth switching element of the lower arm".

A connection point 6A between the switching element 51 and the switching element 52 and a connection point 6B between the switching element 53 and the switching element 54 constitute an alternating-current end of the bridge circuit. The single-phase motor 12 is connected between the connection point 6A and the connection point 6B.

An example of each of the switching elements 51 to 54 is a metal-oxide-semiconductor field-effect transistor (MOSFET). A MOSFET is an example of a field-effect transistor (FET).

In the switching element 51, a body diode 51a connected in parallel between the drain and source of the switching element 51 is formed. In the switching element 52, a body diode 52a connected in parallel between the drain and source of the switching element 52 is formed. In the switching element 53, a body diode 53a connected in parallel between the drain and source of the switching element 53 is formed. In the switching element 54, a body diode 54a connected in parallel between the drain and source of the switching element 54 is formed. Each of the plurality of body diodes 51a, 52a, 53a, and 54a is a parasitic diode formed inside the MOSFET, and is used as a freewheeling diode. Note that a separate freewheeling diode may be connected. Instead of MOSFETs, insulated gate bipolar transistors (IGBTs) may be used.

The switching elements 51 to 54 are not limited to MOSFETs formed of a silicon-based material, but may be MOSFETs formed of a wide bandgap (WBG) semiconductor such as silicon carbide, gallium nitride, gallium oxide, or diamond.

In general, WBG semiconductors have higher withstand voltage and heat resistance than silicon semiconductors. Therefore, by using WBG semiconductors for the plurality of switching elements 51 to 54, the withstand voltage property and allowable current density of the switching elements are increased, which can contribute to reducing the size of the semiconductor module incorporating the switching elements. In addition, the high heat resistance of WBG semiconductors can contribute to reducing the size of the heat dissipation part for dissipating heat generated by the semiconductor module, and to simplifying the heat dissipation structure that dissipates heat generated by the semiconductor module.

Among the switching elements 51 to 54, the switching elements 52 and 54, which are the elements of the lower arm, are preferably elements formed of a WBG semiconductor. As will be described in more detail later, in a case where the switching control according to the present embodiment is applied to the switching elements 51 to 54, the switching elements 52 and 54, which are the elements of the lower arm, are switched larger times than the switching elements 51 and 53, which are the elements of the upper arm, do. That is why elements formed of WBG semiconductors are used as the switching elements 52 and 54, which are switched relatively large times, thereby improving the operating efficiency of the inverter 11.

In addition, the switching elements 52 and 54, which are the elements of the lower arm, are preferably elements having larger current capacities than those of the switching elements 51 and 53, which are the elements of the upper arm. Elements having large current capacities have smaller on-resistances than those of elements having small current capacities. That is why elements having larger current capacities than those of the switching elements 51 and 53 are used as the switching elements 52 and 54, thereby further reducing the conduction loss and thus improving the operating efficiency of the inverter 11.

In FIG. 2, a shunt resistor 55a is provided between the terminal on the low potential side of the switching element 52 and the direct-current bus 16b, and a shunt resistor 55b is provided between the terminal on the low potential side of the switching element 54 and the direct-current bus 16b. The shunt resistor 55a is a detector for detecting the current flowing through the leg 5A, and the shunt resistor 55b is a detector for detecting the current flowing through the leg 5B. The shunt resistor 55a and the current detection unit 22 constitute a "first current detection means", and the shunt resistor 55b and the current detection unit 22 constitute a "second current detection means". In the following description, the component corresponding to the shunt resistor 55a may be referred to as a "detector of the first current detection means" or a "first current detector", and the component corresponding to the shunt resistor 55b may be referred to as a "detector of the second current detection means" or a "second current detector".

Note that the shunt resistor 55a is not limited to that illustrated in FIG. 2 as long as it can detect the current flowing in the leg 5A. The shunt resistor 55a may be disposed between the direct-current bus 16a and the terminal on the high potential side of the switching element 51. Alternatively, the shunt resistor 55a may be disposed between the terminal on the low potential side of the switching element 51 and the connection point 6A. Alternatively, the shunt resistor 55a may be disposed between the connection point 6A and the terminal on the high potential side of the switching element 52. Similarly, the shunt resistor 55b may be disposed between the direct-current bus 16a and the terminal on the high potential side of the switching element 53. Alternatively, the shunt resistor 55b may be disposed between the terminal on the low potential side of the switching element 53 and the connection point 6B. Alternatively, the shunt resistor 55b may be disposed between the connection point 6B and the terminal on the high potential side of the switching element 54. Instead of the shunt resistors 55a and 55b, the on-resistance of the MOFFETs may be used to achieve a configuration in which the current is detected with the voltage generated across the on-resistance.

FIG. 3 is a block diagram illustrating a functional part that generates PWM signals among the functional parts of the control unit 25 illustrated in FIG. 1.

In FIG. 3, the carrier comparison unit 38 receives input of a lead angle phase θᵥ under lead angle control and a reference phase θₑ, which are used for generating the voltage command Vₘ as described later. The reference phase θₑ is a phase obtained by converting a rotor mechanical angle θₘ, i.e. an angle from the reference position of the rotor 12a, into an electric angle. Note that the motor driving apparatus according to the present embodiment has what is called a position sensorless drive configuration, in which position sensor signals from a position sensor are not used. Thus, the rotor mechanical angle θₘ and the reference phase θₑ are estimated by computation. The "lead angle phase" as used herein represents the "lead angle" of the voltage command in phase. Further, the "lead angle" as used herein is the phase difference between the motor-applied voltage applied to the winding of the stator 12b and the motor-induced voltage induced in the winding of the stator 12b. Note that the "lead angle" takes a positive value when the motor applied voltage has its phase leading a phase of the motor induced voltage.

In addition to the lead angle phase θᵥ and the reference phase θₑ, the carrier comparison unit 38 receives input of the carrier generated by the carrier generation unit 33, the direct-current voltage V_{dc}, and the voltage amplitude command V*. The voltage amplitude command V* is the amplitude value of the voltage command Vₘ. The carrier comparison unit 38 generates the PWM signals Q1 to Q4 on the basis of the carrier, the lead angle phase θᵥ, the reference phase θₑ, the direct-current voltage V_{dc}, and the voltage amplitude command V*.

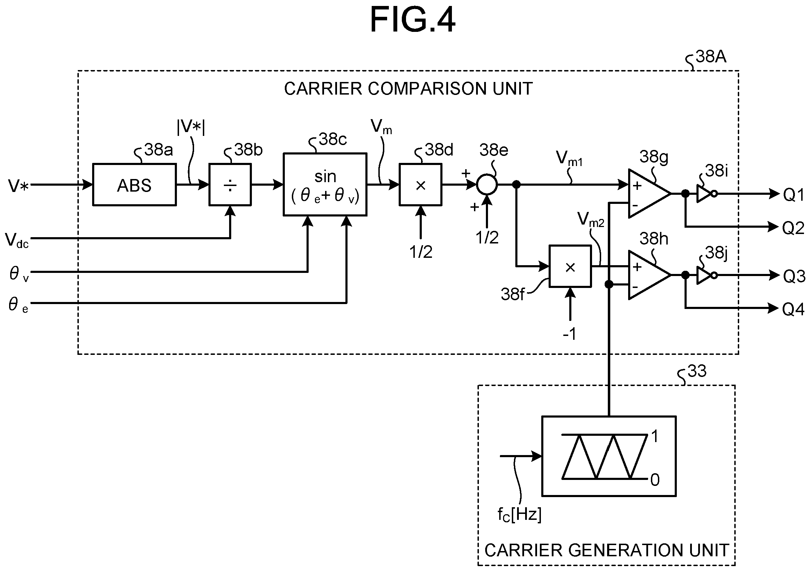

FIG. 4 is a block diagram illustrating an example of the carrier comparison unit 38 illustrated in FIG. 3. FIG. 4 depicts the detailed configuration of the carrier comparison unit 38A and the carrier generation unit 33.

In FIG. 4, a carrier frequency f_{c} [Hz], which is the frequency of the carrier, is set in the carrier generation unit 33. As indicated by the arrow of the carrier frequency f_{c}, a triangular wave carrier that moves up and down between "0" and "1" is illustrated as an example of the carrier waveform. The PWM control of the inverter 11 includes synchronous PWM control and asynchronous PWM control. In the case of synchronous PWM control, it is necessary to synchronize the carrier with the lead angle phase θᵥ. On the other hand, in the case of asynchronous PWM control, it is not necessary to synchronize the carrier with the lead angle phase θᵥ.

As illustrated in FIG. 4, the carrier comparison unit 38A includes an absolute value computation unit 38a, a division unit 38b, a multiplication unit 38c, a multiplication unit 38d, a multiplication unit 38f, an addition unit 38e, a comparison unit 38g, a comparison unit 38h, an output inversion unit 38i, and an output inversion unit 38j.

The absolute value computation unit 38a computes an absolute value |V*| of the voltage amplitude command V*. The division unit 38b divides the absolute value |V*| by the direct-current voltage V_{dc} detected by the voltage sensor 20. In the configuration of FIG. 4, the output of the division unit 38b is used as the modulation factor. Battery voltage, which is the output voltage of the battery 10, fluctuates due to a continuous flow of current. However, dividing the absolute value |V*| by the direct-current voltage V_{dc} enables the value of the modulation factor to be adjusted so that the motor applied voltage does not decrease due to a decrease in battery voltage.

The multiplication unit 38c computes the sine value of "θₑ+θᵥ", i.e. the reference phase θₑ plus the lead angle phase θᵥ. The computed sine value of "θₑ+θᵥ" is multiplied by the modulation factor that is the output of the division unit 38b. The multiplication unit 38d multiplies the voltage command Vₘ, which is the output of the multiplication unit 38c, by "1/2". The addition unit 38e adds "1/2" to the output of the multiplication unit 38d. The multiplication unit 38f multiplies the output of the addition unit 38e by "-1". Also, the output of the addition unit 38e is input to the comparison unit 38g as a positive voltage command Vₘ₁ for driving the two switching elements 51 and 53 of the upper arm among the plurality of switching elements 51 to 54. The output of the multiplication unit 38f is input to the comparison unit 38h as a negative voltage command Vₘ₂ for driving the two switching elements 52 and 54 of the lower arm.

The comparison unit 38g compares the positive voltage command Vₘ₁ with the amplitude of the carrier. The output of the output inversion unit 38i, which is the inverted output of the comparison unit 38g, serves as the PWM signal Q1 for the switching element 51, and the output of the comparison unit 38g serves as the PWM signal Q2 for the switching element 52. Similarly, the comparison unit 38h compares the negative voltage command Vₘ₂ with the amplitude of the carrier. The output of the output inversion unit 38j, which is the inverted output of the comparison unit 38h, serves as the PWM signal Q3 for the switching element 53, and the output of the comparison unit 38h serves as the PWM signal Q4 for the switching element 54. The output inversion unit 38i ensures that the switching element 51 and the switching element 52 are not on at the same time, and the output inversion unit 38j ensures that the switching element 53 and the switching element 54 are not on at the same time.

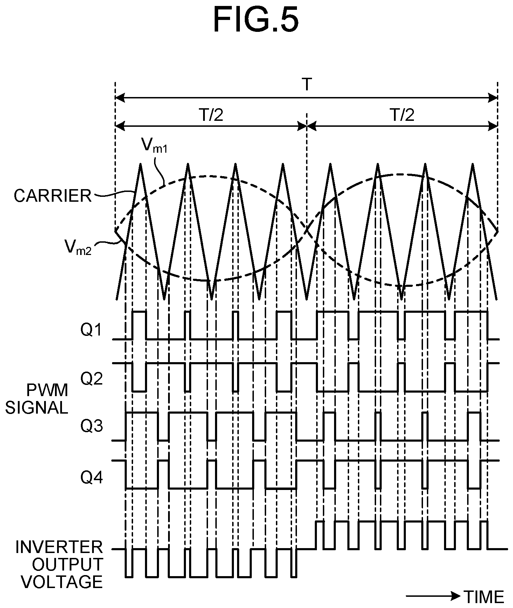

FIG. 5 is a time chart illustrating examples of the main waveforms in the carrier comparison unit 38A illustrated in FIG. 4. FIG. 5 depicts the waveform of the positive voltage command Vₘ₁ output from the addition unit 38e, the waveform of the negative voltage command Vₘ₂ output from the multiplication unit 38f, the waveforms of the PWM signals Q1 to Q4, and the waveform of the inverter output voltage.

The PWM signal Q1 is "Low" when the positive voltage command Vₘ₁ is larger than the carrier, and "High" when the positive voltage command Vₘ₁ is smaller than the carrier. The PWM signal Q2 is the inverted signal of the PWM signal Q1. The PWM signal Q3 is "Low" when the negative voltage command Vₘ₂ is larger than the carrier, and "High" when the negative voltage command Vₘ₂ is smaller than the carrier. The PWM signal Q4 is the inverted signal of the PWM signal Q3. In this way, the circuit illustrated in FIG. 4 is configured as "Low Active", but may be configured as "High Active", in which each signal has the opposite value.

As illustrated in FIG. 5, the waveform of the inverter output voltage contains voltage pulses due to the difference voltage between the PWM signal Q1 and the PWM signal Q4 and voltage pulses due to the difference voltage between the PWM signal Q3 and the PWM signal Q2. These voltage pulses are applied to the single-phase motor 12 as the motor applied voltage.

Known modulation methods used in generating the PWM signals Q1 to Q4 include bipolar modulation and unipolar modulation. Bipolar modulation is a modulation method for outputting voltage pulses that switch to a positive or negative potential for each period of the voltage command Vₘ. Unipolar modulation is a modulation method for outputting voltage pulses that switch between three potentials for each period of the voltage command Vₘ, that is, voltage pulses that switch between a positive potential, a negative potential, and zero potential. The waveforms illustrated in FIG. 5 are produced by unipolar modulation. The motor driving apparatus 2 according to the present embodiment may use either modulation method. In applications that requires control for providing the motor current waveform closer to a sinusoidal wave, it is preferable to employ unipolar modulation, which has a lower harmonic content than bipolar modulation.

The waveforms illustrated in FIG. 5 are obtained with a method in which the four switching elements of the switching elements 51 and 52 constituting the leg 5A and the switching elements 53 and 54 constituting the leg 5B are subjected to switching operation during the time period of a half cycle T/2 of the voltage command Vₘ. This method is called "two-sided PWM" because switching operation is performed with both the positive voltage command Vₘ₁ and the negative voltage command Vₘ₂. There is another method called "one-sided PWM" in contrast to the "two-sided PWM". For the "one-sided PWM", the switching operation of the switching elements 51 and 52 is suspended in one half of one period T of the voltage command Vₘ, and the switching operation of the switching elements 53 and 54 is suspended in the other half of the one period T of the voltage command Vₘ. The "one-sided PWM" will be described hereinafter. In the following description, the operation mode in which two-sided PWM is used for operation is referred to as "two-sided PWM mode", and the operation mode in which one-sided PWM is used for operation is referred to as "one-sided PWM mode".

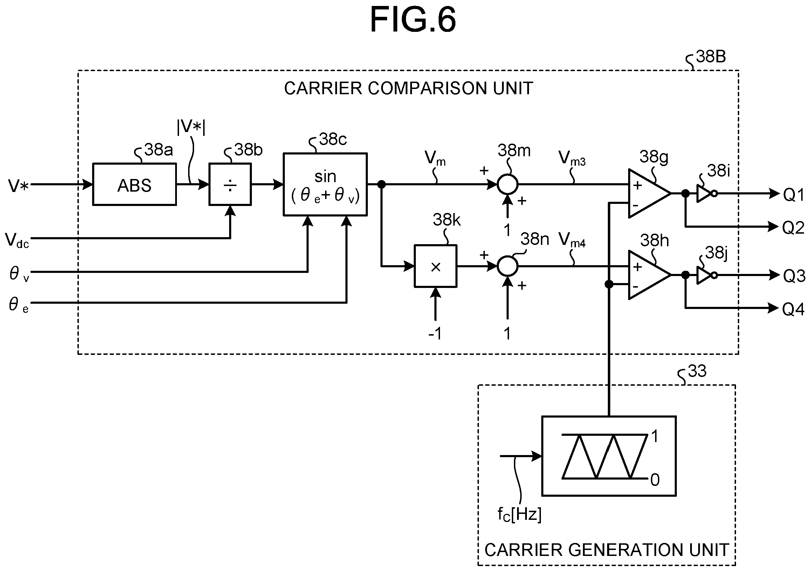

FIG. 6 is a block diagram illustrating another example of the carrier comparison unit 38 illustrated in FIG. 3. FIG. 6 depicts an example of the PWM signal generation circuit produced by the above-mentioned "one-sided PWM". Specifically, FIG. 6 depicts the detailed configuration of a carrier comparison unit 38B and the carrier generation unit 33. Note that the configuration of the carrier generation unit 33 illustrated in FIG. 6 is the same as or equivalent to that illustrated in FIG. 4. Components in the configuration of the carrier comparison unit 38B illustrated in FIG. 6 that are the same as or equivalent to those of the carrier comparison unit 38A illustrated in FIG. 4 are denoted by the same reference signs.

As illustrated in FIG. 6, the carrier comparison unit 38B includes the absolute value computation unit 38a, the division unit 38b, the multiplication unit 38c, a multiplication unit 38k, an addition unit 38m, an addition unit 38n, the comparison unit 38g, the comparison unit 38h, the output inversion unit 38i, and the output inversion unit 38j.

The absolute value computation unit 38a computes the absolute value |V*| of the voltage amplitude command V*. The division unit 38b divides the absolute value |V*| by the direct-current voltage V_{dc} detected by the voltage sensor 20. The output of the division unit 38b is used as the modulation factor also in the configuration of FIG. 6.

The multiplication unit 38c computes the sine value of "θₑ+θᵥ", i.e. the reference phase θₑ plus the lead angle phase θᵥ. The computed sine value of "θₑ+θᵥ" is multiplied by the modulation factor that is the output of the division unit 38b. The multiplication unit 38k multiplies the voltage command Vₘ, which is the output of the multiplication unit 38c, by "-1". The addition unit 38m adds "1" to the voltage command Vₘ that is the output of the multiplication unit 38c. The addition unit 38n adds "1" to the output of the multiplication unit 38k, that is, the inverted output of the voltage command Vₘ. The output of the addition unit 38m is input to the comparison unit 38g as a first voltage command Vₘ₃ for driving the two switching elements 51 and 53 of the upper arm among the plurality of switching elements 51 to 54. The output of the addition unit 38n is input to the comparison unit 38h as a second voltage command Vₘ₄ for driving the two switching elements 52 and 54 of the lower arm.

The comparison unit 38g compares the first voltage command Vₘ₃ with the amplitude of the carrier are compared. The output of the output inversion unit 38i, which is the inverted output of the comparison unit 38g, serves as the PWM signal Q1 for the switching element 51, and the output of the comparison unit 38g serves as the PWM signal Q2 for the switching element 52. Similarly, the comparison unit 38h compares the second voltage command Vₘ₄ with the amplitude of the carrier. The output of the output inversion unit 38j, which is the inverted output of the comparison unit 38h, serves as the PWM signal Q3 for the switching element 53, and the output of the comparison unit 38h serves as the PWM signal Q4 for the switching element 54. The output inversion unit 38i ensures that the switching element 51 and the switching element 52 are not on at the same time, and the output inversion unit 38j ensures that the switching element 53 and the switching element 54 are not on at the same time.

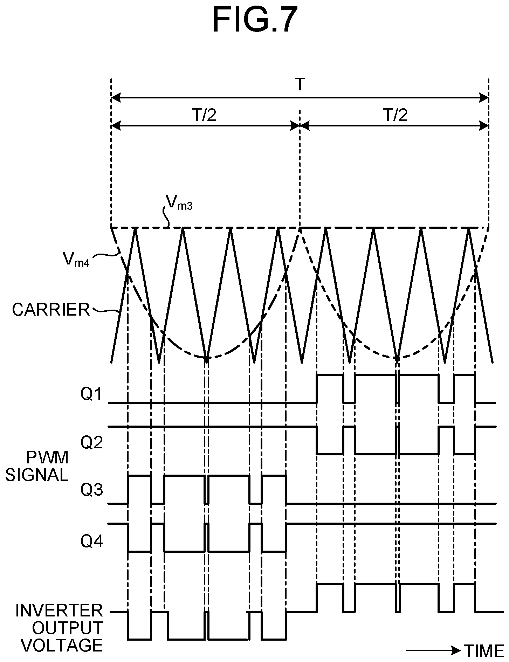

FIG. 7 is a time chart illustrating examples of the main waveforms in the carrier comparison unit 38B illustrated in FIG. 6. FIG. 7 depicts the waveform of the first voltage command Vₘ₃ output from the addition unit 38m, the waveform of the second voltage command Vₘ₄ output from the addition unit 38n, the waveforms of the PWM signals Q1 to Q4, and the waveform of the inverter output voltage. In FIG. 7, for convenience, the waveform portion of the first voltage command Vₘ₃ having amplitude values larger than the peak value of the carrier and the waveform portion of the second voltage command Vₘ₄ having amplitude values larger than the peak value of the carrier are represented by flat straight lines.

The PWM signal Q1 is "Low" when the first voltage command Vₘ₃ is larger than the carrier, and "High" when the first voltage command Vₘ₃ is smaller than the carrier. The PWM signal Q2 is the inverted signal of the PWM signal Q1. The PWM signal Q3 is "Low" when the second voltage command Vₘ₄ is larger than the carrier, and "High" when the second voltage command Vₘ₄ is smaller than the carrier. The PWM signal Q4 is the inverted signal of the PWM signal Q3. In this way, the circuit illustrated in FIG. 6 is configured as "Low Active", but may be configured as "High Active", in which each signal has the opposite value.

As illustrated in FIG. 7, the waveform of the inverter output voltage contains voltage pulses due to the difference voltage between the PWM signal Q1 and the PWM signal Q4 and voltage pulses due to the difference voltage between the PWM signal Q3 and the PWM signal Q2. These voltage pulses are applied to the single-phase motor 12 as the motor applied voltage.

The waveforms illustrated in FIG. 7 show that the switching operation of the switching elements 51 and 52 is suspended in one half of the one period T of the voltage command Vₘ, and the switching operation of the switching elements 53 and 54 is suspended in the other half of the one period T of the voltage command Vₘ.

The waveforms illustrated in FIG. 7 also show that the switching element 52 is controlled such that the switching element 52 is always in an on state in one half of the one period T of the voltage command Vₘ, and the switching element 54 is controlled such that the switching element 54 is always in an on state in the other half of the one period T of the voltage command Vₘ. Note that FIG. 7 is an example, and it is also possible that the switching element 51 is controlled such that the switching element 51 is always in an on state in one half of the period, and the switching element 53 is controlled such that the switching element 53 is always in an on state in the other half of the period. That is, the waveforms illustrated in FIG. 7 are characterized in that at least one of the switching elements 51 to 54 is controlled such that the at least one switching element is in an on state in half a period of the voltage command Vₘ.

In FIG. 7, the waveform of the inverter output voltage is a result of unipolar modulation, in which the waveform switches between three potentials for each period of the voltage command Vₘ. As described above, bipolar modulation may be used instead of unipolar modulation, but it is preferable to employ unipolar modulation in applications that require control for providing the motor current waveform closer to a sinusoidal wave.

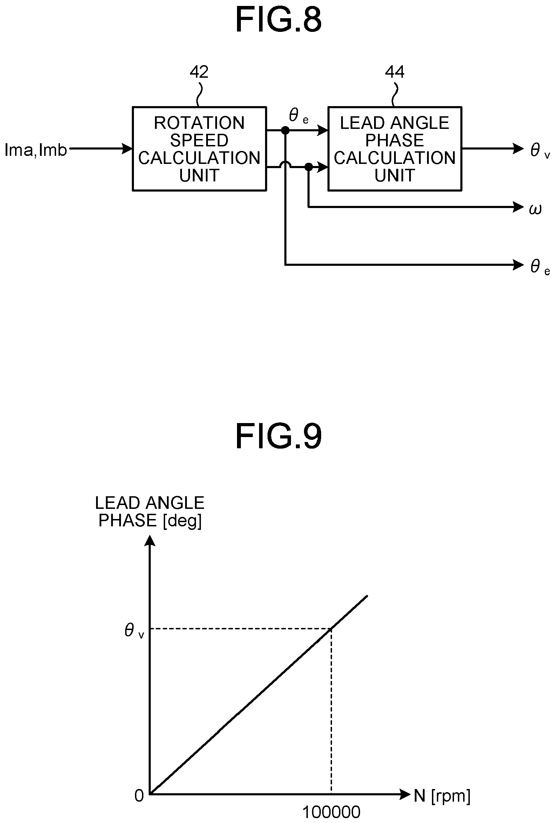

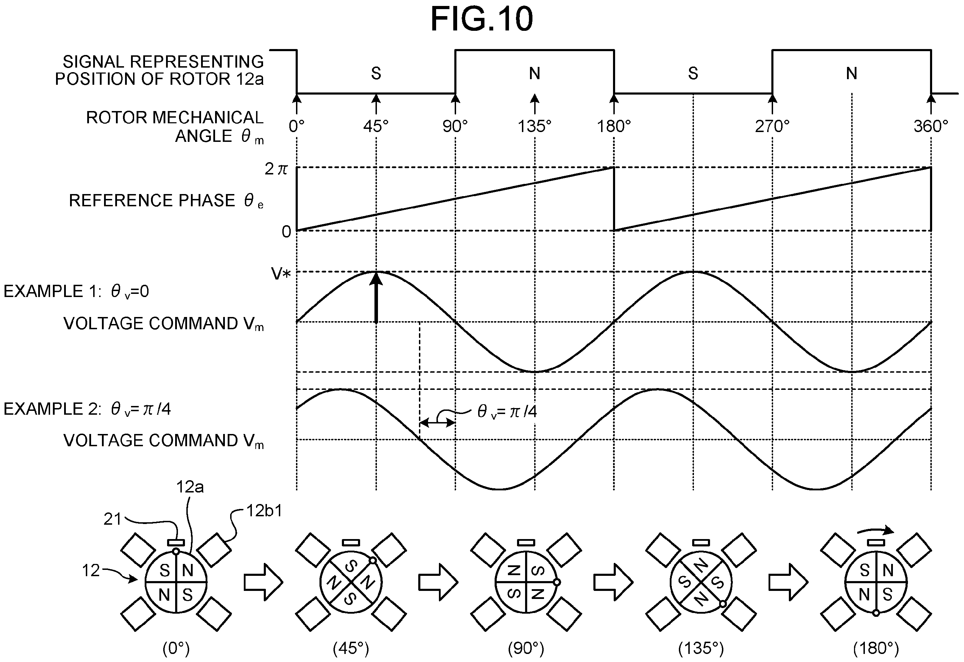

Next, the lead angle control according to the present embodiment will be described with reference to FIGS. 8 to 10. FIG. 8 is a block diagram illustrating a functional configuration for calculating the lead angle phase θᵥ that is input to the carrier comparison unit 38A illustrated in FIG. 4 and the carrier comparison unit 38B illustrated in FIG. 6. FIG. 9 is a diagram illustrating an exemplary method for calculating the lead angle phase θᵥ according to an embodiment. FIG. 10 is a time chart used to explain the relationship between the voltage command Vₘ and the lead angle phase θᵥ illustrated in FIGS. 4 and 6.

As illustrated in FIG. 8, the function of calculating the lead angle phase θᵥ can be implemented by the rotation speed calculation unit 42 and the lead angle phase calculation unit 44. The rotation speed calculation unit 42 calculates a rotation speed ω of the single-phase motor 12 on the basis of the current signals Ima and Imb detected by the current detection unit 22. The rotation speed calculation unit 42 also calculates the rotor mechanical angle θₘ, which is the angle from the reference position of the rotor 12a, on the basis of the current signals Ima and Imb, and calculates the reference phase θₑ by converting the rotor mechanical angle θₘ into an electric angle.

The uppermost part of FIG. 10 represents the position of the rotor 12a by signal level. The waveform of the uppermost part of FIG. 10 has an edge where the signal falls from "H" to "L", and this edge is the reference position of the rotor 12a. This reference position is set to "0°" of the rotor mechanical angle θₘ. Below the series of numerical values representing the rotor mechanical angle θₘ is the reference phase θₑ, which is the phase obtained by converting the rotor mechanical angle θₘ into an electric angle. The lead angle phase calculation unit 44 calculates the lead angle phase θᵥ on the basis of the rotation speed ω and the reference phase θₑ calculated by the rotation speed calculation unit 42.

The horizontal axis of FIG. 9 represents a rotation speed N, and the vertical axis of FIG. 9 represents the lead angle phase θᵥ. As illustrated in FIG. 9, the lead angle phase θᵥ can be determined by using a function in which the lead angle phase θᵥ increases as the rotation speed N increases. In the example of FIG. 9, the lead angle phase θᵥ is determined using a first-degree linear function, but a first-degree linear function is a non-limiting example. Any function other than a first-degree linear function may be used provided that the other function represents a relationship in which the lead angle phase θᵥ stays constant or increases as the rotation speed N increases.

The middle part of FIG. 10 depicts two examples of the waveform of the voltage command Vₘ as "Example 1" and "Example 2". The lowermost part of FIG. 10 depicts the rotor 12a that rotates clockwise by the rotor mechanical angles θₘ of 0°, 45°, 90°, 135°, and 180°. The rotor 12a of the single-phase motor 12 includes four magnets, and four teeth 12b1 are provided along the outer circumference of the rotor 12a. In the case where the rotor 12a rotates clockwise, the rotor mechanical angle θₘ is estimated on the basis of the current signals Ima and Imb, and the reference phase θₑ is calculated by converting the estimated rotor mechanical angle θₘ into an electric angle.

The voltage command Vₘ illustrated in the middle part of FIG. 10 as "Example 1" is the voltage command in the case of lead angle phase θᵥ=0. In the case of lead angle phase θᵥ=0, the voltage command Vₘ in phase with the reference phase θₑ is output. Note that the amplitude of the voltage command Vₘ at this time is determined on the basis of the voltage amplitude command V* described above.

The voltage command Vₘ illustrated in the middle part of FIG. 10 as "Example 2" is the voltage command in the case of lead angle phase θᵥ=π/4. In the case of lead angle phase θᵥ=π/4, the voltage command Vₘ having its phase leading the reference phase θₑ by π/4 is output. π/4 is a component of the lead angle phase θᵥ.

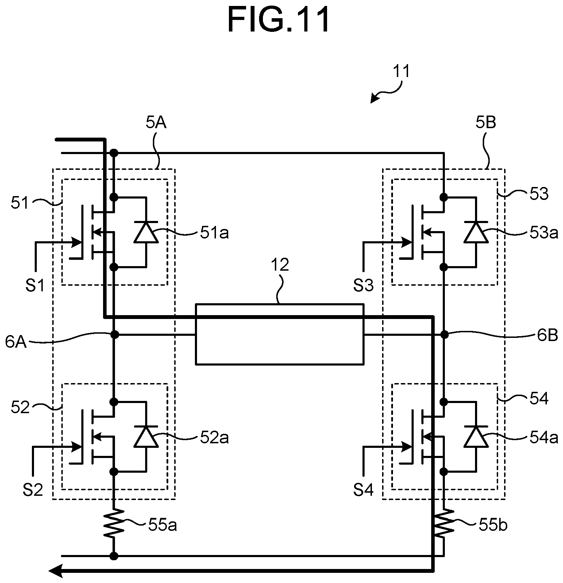

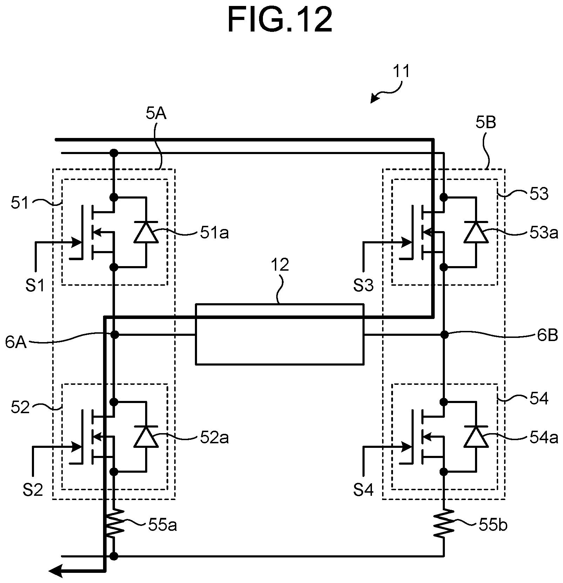

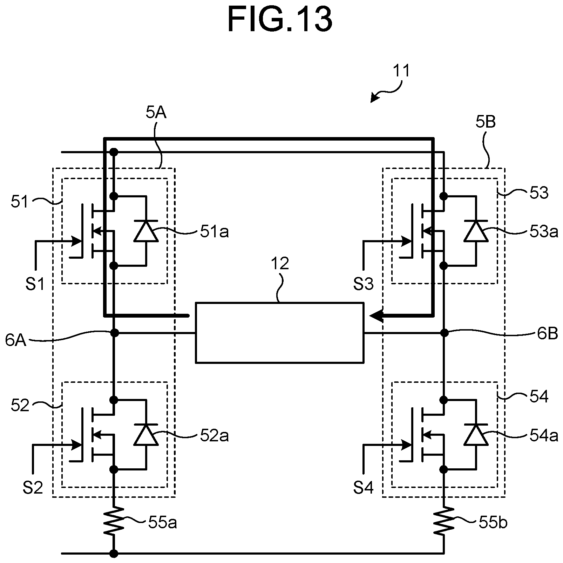

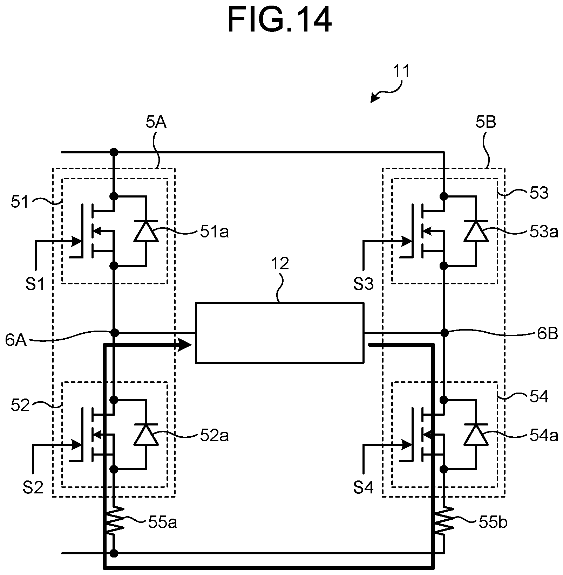

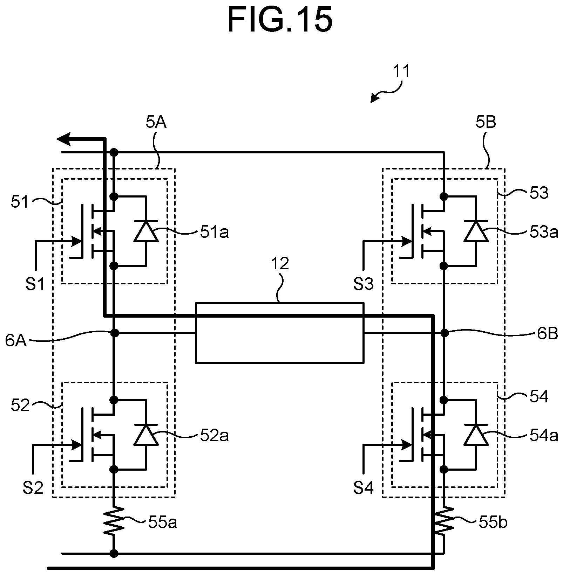

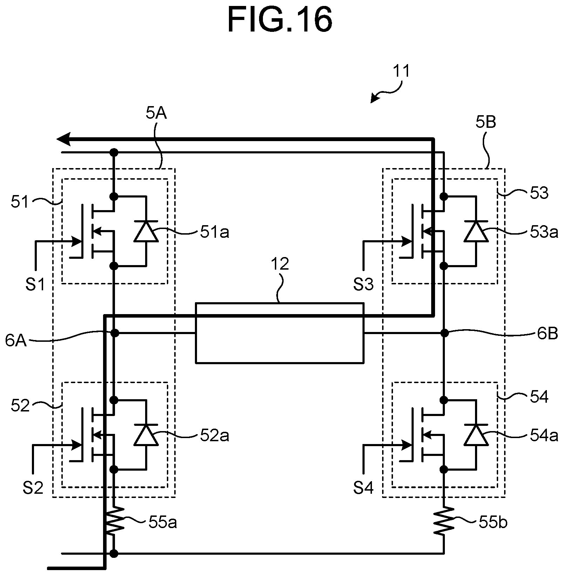

Next, the operation patterns of the inverter 11 will be described with reference to FIGS. 11 to 16. FIG. 11 is a diagram of FIG. 2 illustrating one of the current paths through which power is supplied from the battery 10 to the single-phase motor 12. FIG. 12 is a diagram of FIG. 2 illustrating another one of the current paths through which power is supplied from the battery 10 to the single-phase motor 12. FIG. 13 is a diagram of FIG. 2 illustrating one of the current paths for the flywheel operation of the inverter 11. FIG. 14 is a diagram of FIG. 2 illustrating another one of the current paths for the flywheel operation of the inverter 11. FIG. 15 is a diagram illustrating one of the current paths through which the regenerative energy of the single-phase motor 12 is supplied to the battery 10. FIG. 16 is a diagram illustrating another one of the current paths through which the regenerative energy of the single-phase motor 12 is supplied to the battery 10.

First, in FIG. 11, the switching elements 51 and 54 become conductive in response to the drive signals S1 and S4, and the current flows through the switching element 51, the single-phase motor 12, the switching element 54, and the shunt resistor 55b in this order. In FIG. 12, the switching elements 52 and 53 become conductive in response to the drive signals S2 and S3, and the current flows through the switching element 53, the single-phase motor 12, the switching element 52, and the shunt resistor 55a in this order. In either case, power is supplied from the battery 10 to the single-phase motor 12. In addition, in either case, the current flows through either the shunt resistor 55a or the shunt resistor 55b.

Next, FIGS. 13 and 14 will be described. FIGS. 13 and 14 illustrate switching patterns in which the drive signals S1 and S3 or the drive signals S2 and S4 are on at the same time to cause freewheeling (also referred to as "flywheel"). In FIG. 13, the switching elements 51 and 53 become conductive in response to the drive signals S1 and S3, and the flywheel current flowing out of the single-phase motor 12 passes through the switching element 51 and the switching element 53 and returns to the single-phase motor 12. In FIG. 14, the switching elements 52 and 54 become conductive in response to the drive signals S2 and S4, and the flywheel current flowing out of the single-phase motor 12 passes through the switching element 54, the shunt resistor 55b, the shunt resistor 55a, and the switching element 52 and returns to the single-phase motor 12. What is characteristic of these operations is that the switching pattern of FIG. 13 allows no flows of current through the shunt resistors 55a and 55b, whereas the switching pattern of FIG. 14 allows the flows of current through both the shunt resistors 55a and 55b.

Next, FIGS. 15 and 16 will be described. FIGS. 15 and 16 both illustrate operations in which the regenerative energy of the single-phase motor 12 is supplied to the battery 10. In FIG. 15, the switching elements 51 and 54 become conductive in response to the drive signals S1 and S4, and the regenerative current flowing out of the single-phase motor 12 passes through the switching element 51, the battery 10 (not illustrated in FIG. 15), the shunt resistor 55b, and the switching element 54 and returns to the single-phase motor 12. In FIG. 16, the switching elements 52 and 53 become conductive in response to the drive signals S2 and S3, and the regenerative current flowing out of the single-phase motor 12 passes through the switching element 53, the battery 10 (not illustrated in FIG. 15), the shunt resistor 55a, and the switching element 52 and returns to the single-phase motor 12. In either case, the current flows through either the shunt resistor 55a or the shunt resistor 55b.

As is clear from the above description, the switching patterns other than the switching pattern of FIG. 13 allow the current to flow through either the shunt resistor 55a or 55b. That is, it can be seen that operating the inverter 11 such that the switching pattern illustrated in FIG. 13 does not occur enables the motor current Im to be detected in all time periods.

Now compare FIG. 5 with FIG. 7, FIG. 5 illustrating the waveforms of the PWM signals in the case where the inverter 11 is operated in the two-sided PWM mode, FIG. 7 illustrating the waveforms of the PWM signals in the case where the inverter 11 is operated in the one-sided PWM mode. FIG. 5 has time periods in which Q1 and Q3 are on at the same time, whereas FIG. 7 has no time period in which Q1 and Q3 are on at the same time. That is, operating the inverter 11 in the one-sided PWM mode makes it possible to eliminate the time periods in which Q1 and Q3 are on at the same time.

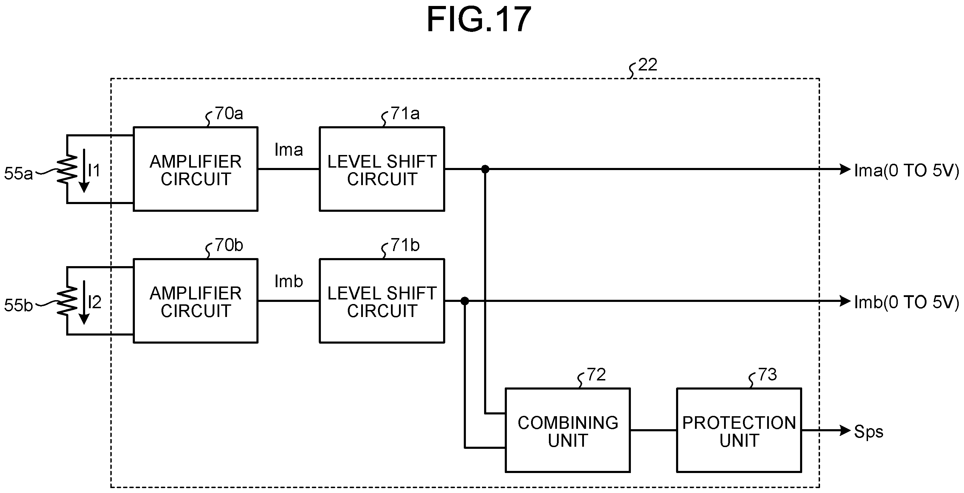

Next, the current detection unit according to an embodiment will be described. FIG. 17 is a diagram illustrating an exemplary configuration of the current detection unit 22 illustrated in FIG. 1. In FIG. 17, the current detection unit 22 includes amplifier circuits 70a and 70b, level shift circuits 71a and 71b, a combining unit 72, and a protection unit 73. The combining unit 72 and the protection unit 73 are components that generate the protection signal Sps. That is, a protective function is added to the current detection unit 22 illustrated in FIG. 17.

The amplifier circuit 70a amplifies the voltage across the shunt resistor 55a generated by a current I1 flowing through the shunt resistor 55a. Similarly, the amplifier circuit 70b amplifies the voltage across the shunt resistor 55b generated by a current I2 flowing through the shunt resistor 55b.

Because the shunt resistors 55a and 55b are disposed on the current path for the single-phase motor 12, it is desirable that the shunt resistors 55a and 55b have minute resistance values in view of loss and heat generation. When the motor current Im flows, thus, the voltages across the shunt resistors 55a and 55b have extremely low values. For this reason, a configuration including the amplifier circuits 70a and 70b is desirable, such as the one illustrated in FIG. 17.

The level shift circuit 71a shifts the output level of the amplifier circuit 70a to a level at which the output signal of the level shift circuit 71a can be input to the processor 31. Similarly, the level shift circuit 71b shifts the output level of the amplifier circuit 70b to a level at which the output signal of the level shift circuit 71b can be input to the processor 31.

A typical example of the processor 31 is a microcontroller. Microcontrollers are generally designed to detect a positive voltage of about 0 to 5 V, and do not support negative voltages up to 5 V. As illustrated in FIGS. 11, 12, and 14 to 16, the direction of the current flowing through each of the shunt resistors 55a and 55b changes. As a result, a negative voltage may be generated depending on the polarity of the current. Therefore, for example, in a case where the maximum value of the output voltage of the microcontroller is 5 V, an offset of about 2.5 V is provided to set the zero point. Then, the range of 0 to 2.5 V is defined as negative voltage, and the range of 2.5 V to 5 V is defined as positive voltage. This function is implemented by the level shift circuits 71a and 71b. The level shift circuits 71a and 71b enable input to the analog digital (AD) input terminal (not illustrated) of the processor 31. In addition, the processor 31 can detect positive and negative currents by converting the outputs of the level shift circuits 71a and 71b, which are voltage values, into current values. Note that the range of 0 to 2.5 V may be defined as positive voltage, the range of 2.5 V to 5 V may be defined as negative voltage, and the processor 31 may perform positive-negative inversion processing.

The combining unit 72 combines the output signals of the level shift circuits 71a and 71b into one signal, and outputs the one signal to the protection unit 73. An example of the combining unit 72 is an adder circuit. The protection unit 73 generates and outputs the protection signal Sps on the basis of the result of comparison of the current signal generated through combination by the combining unit 72 with a set protection threshold. Specifically, the protection unit 73 compares the level of the current signal generated through combination by the combining unit 72 with the protection threshold, and, when the level of the current signal is higher than the protection threshold, generates the protection signal Sps. The protection signal Sps is input to the processor 31. Upon receiving the protection signal Sps, the processor 31 stops generating each PWM signal for driving the corresponding switching element of the inverter 11, in order to protect the inverter 11.

Below is a supplementary explanation of the configuration of the combining unit 72 and the protection unit 73 described above. For example, as a protective configuration for short-circuit failures in the switching elements, it is possible to add a protective function to each of the shunt resistors 55a and 55b. Unfortunately, the configuration in which a protective function is added to each of the shunt resistors 55a and 55b requires an increased number of parts and entails an increase in cost. In view of this, the current signals Ima and Imb detected by the shunt resistors 55a and 55b are combined into one signal by the combining unit 72. Then, on the basis of the combined signal generated by the combining unit 72, the protection unit 73 determines whether there is an overcurrent. Then, the protection signal Sps generated by the protection unit 73 is transmitted to the processor 31, thereby causing the processor 31 to stop driving each switching element of the inverter 11.

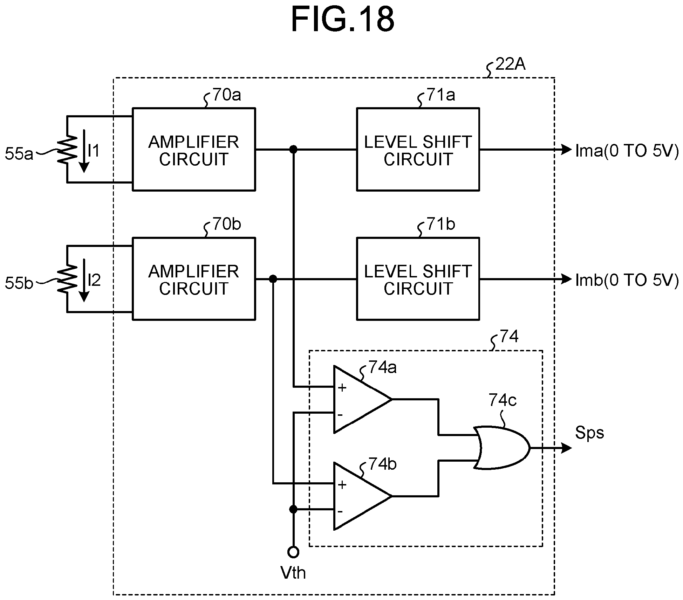

Note that the current detection unit 22 illustrated in FIG. 17 may be configured as illustrated in FIG. 18. FIG. 18 is a diagram illustrating the configuration of a modification of the current detection unit 22 illustrated in FIG. 1. The configuration of the current detection unit 22A illustrated in FIG. 18 is different from that of the current detection unit 22 illustrated in FIG. 17 in that the combining unit 72 and the protection unit 73 are replaced with a protection unit 74. The protection unit 74 includes comparators 74a and 74b and an OR circuit 74c. The output of the amplifier circuit 70a is input to the comparator 74a, and the output of the amplifier circuit 70b is input to the comparator 74b. Each of the comparators 74a and 74b compares the level of the corresponding input signal with a threshold Vth, and generates a signal indicating whether there is an overcurrent. The threshold Vth is a protection threshold. In the example of FIG. 18, logic "1" (High) is output in the case where there is an overcurrent, and logic "0" (Low) is output in the case where there is no overcurrent. Then, the output of the OR circuit 74c is input to the processor 31 as the protection signal Sps. Subsequent operations are as described above. Note that, as in the prior art, a separate shunt resistor (not illustrated) may be provided between the connection point of the shunt resistors 55a and 55b and the battery 10 to thereby provide protection against overcurrent flow.

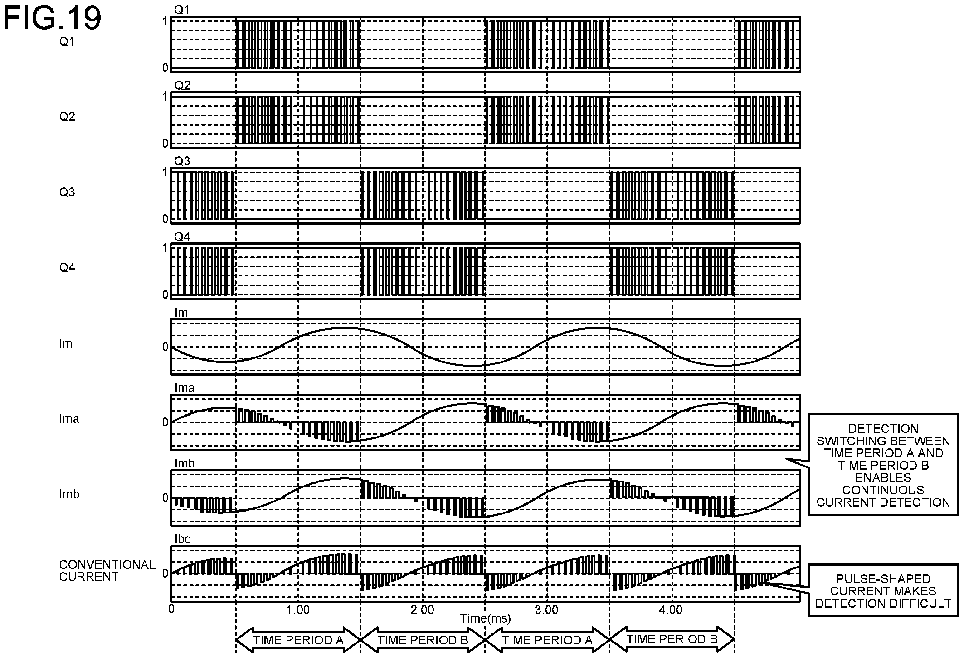

FIG. 19 is a diagram illustrating various waveforms in the case where the inverter 11 is operated in the one-sided PWM mode that can eliminate the operation state of FIG. 13. The upper part of FIG. 19 depicts examples of the waveforms of the PWM signals Q1 to Q4 in the case where the inverter 11 is operated in the one-sided PWM mode. The lower part of FIG. 19 depicts the waveform of the motor current Im that flows when the inverter 11 is operated by the PWM signals Q1 to Q4 illustrated in the upper part, and the waveforms of the two current signals Ima and Imb for restoring the motor current Im. In addition, the conventional current in the lowermost part is based on what is called a single shunt resistor current detection method, in which a shunt resistor is provided between the battery 10 and the inverter 11, and represents the waveform of a current Ibc that flows through this shunt resistor.

In FIG. 19, during the time period A (time periods of 0.5 ms to 1.5 ms and 2.5 ms to 3.5 ms), which is the first time period, the current signal Ima is a pulse-shaped current, whereas the current signal Imb is not a pulse-shaped current but a continuous flow of current equivalent to the motor current Im. The current signal Imb flowing at this time may be rephrased as a non-pulse current.

During the time period B (time periods of 1.5 ms to 2.5 ms and 3.5 ms to 4.5 ms), which is the second time period, the current signal Imb is a pulse-shaped current, whereas the current signal Ima is not a pulse-shaped current but a continuous flow of current equivalent to the motor current Im. The current signal Ima flowing at this time may be rephrased as a non-pulse current.

It can be therefore seen that if the current signal Ima is detected in the time period A and the current signal Imb is detected in the time period B, a continuous current equivalent to the motor current Im can be detected in all the time periods. Note that each of the time periods A and B is a time period corresponding to half a period of the motor current Im.

Referring now to the waveforms of FIG. 19, it can be seen that the timing at which the current signals Ima and Imb can be detected by the shunt resistors 55a and 55b coincides with the timing at which to switch the operation of the switching elements 51 to 54. Because the timing of switching of the operation of the switching elements 51 to 54 is managed by the control unit 25, it is possible to obtain a detected value derived from a continuous current equivalent to the motor current Im by selecting either the current signal Ima or Imb in accordance with the voltage output time period.

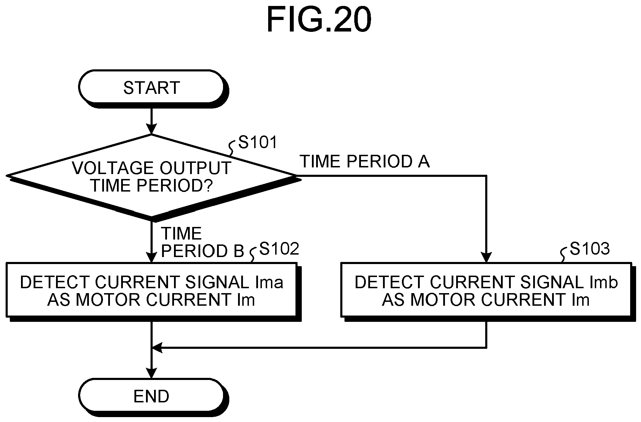

FIG. 20 is a flowchart illustrating a current detection operation according to an embodiment. The operation of the flowchart of FIG. 20 is implemented by the control unit 25. The control unit 25 determines whether the voltage output time period is the time period A or the time period B (step S101). Note that the definitions of the time periods A and B in the flowchart of FIG. 20 are as illustrated in FIG. 19. When the voltage output time period is the "time period B", the control unit 25 detects the current signal Ima as the motor current Im (step S102), and ends the process of FIG. 20. When the voltage output time period is the "time period A", the control unit 25 detects the current signal Imb as the motor current Im (step S103), and ends the process of FIG. 20.

As illustrated in FIG. 20, the control unit 25 switches the selection of the current signals Ima and Imb in accordance with the voltage output time period so that the current can be detected during the time periods in which the current is flowing continuously. Thus, it is not necessary to adjust the AD conversion timing to a specific timing, as in the conventional case of detection that uses a single shunt resistor. In addition, because the current flows continuously during the detection of the current, it is easy to eliminate the influence of current pulsation caused by, for example, ringing due to a change in the state of the switching elements. This makes it possible to improve the noise resistance.

Further, because the current flows continuously, there is no time period in which the current cannot be detected. It is therefore possible to detect the current regardless of the timing of starting of AD conversion. This eliminates the need to use a high-performance, expensive processor, and enables cost reduction. In general, control computation is executed at the peaks and/or troughs of the carrier. In order to reduce the discrepancy between the control start timing and the AD conversion timing, therefore, it is desirable to synchronize the AD conversion timing with a peak or trough of the carrier for current detection.

As described above, in the motor driving apparatus according to an embodiment, the first to fourth switching elements are controlled such that the first time period and the second time period are continuous. During the first time period, a non-pulse current flows through the detector of the first current detection unit provided in the first leg including the first switching element and the second switching element connected in series to each other. During the second time period, a non-pulse current flows through the detector of the second current detection unit provided in the second leg including the third switching element and the fourth switching element connected in series to each other. Thus, there is no undetectable time period in one period of the motor current, and the motor current can be detected reliably and continuously.

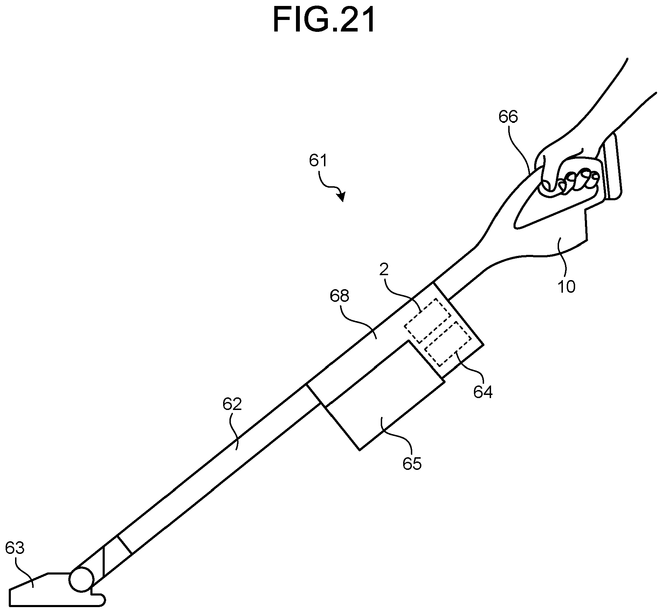

Next, examples of application of the motor driving apparatus according to an embodiment will be described. FIG. 21 is a diagram illustrating the configuration of a vacuum cleaner 61 including the motor driving apparatus 2 according to an embodiment. The vacuum cleaner 61 includes the battery 10 illustrated in FIG. 1, the motor driving apparatus 2 illustrated in FIG. 1, an electric blower 64 that is driven by the single-phase motor 12 illustrated in FIG. 1, a dust collection chamber 65, a sensor 68, a suction port 63, an extension pipe 62, and an operation unit 66.

A user who uses the vacuum cleaner 61 holds the operation unit 66 to operate the vacuum cleaner 61. The motor driving apparatus 2 of the vacuum cleaner 61 drives the electric blower 64 using the battery 10 as a power supply. As the electric blower 64 is driven, dust is sucked through the suction port 63. The sucked dust is collected in the dust collection chamber 65 via the extension pipe 62.

The vacuum cleaner 61 is a product having the single-phase motor 12 rotating at a speed fluctuating from 0 [rpm] to over 100,000 [rpm]. Driving such a product having the single-phase motor 12 rotating at a high speed requires a high carrier frequency. For this reason, the conventional current detection method encounters difficulty in adjusting the A/D conversion timing, and the switching time is shortened, making the detection more difficult. Thus, the control method according to the above-described embodiment is suitable.

In addition, when the voltage based on a voltage command is output to the single-phase motor 12, the control unit 25 suspends the switching operation of the first switching element of the upper arm and the second switching element of the lower arm in one half of the period of the voltage command, and suspends the switching operation of the third switching element of the upper arm and the fourth switching element of the lower arm in the other half of the period of the voltage command. This prevents an increase in switching loss, thereby making it possible to provide the efficient vacuum cleaner 61.

Moreover, the vacuum cleaner 61 according to an embodiment can be reduced in size and weight due to the simplified heat dissipation component described above. Further, because the vacuum cleaner 61 requires neither a current sensor for current detection nor a high-speed analog-to-digital converter, it is possible to provide the vacuum cleaner 61 in a manner that prevents an increase in design cost and manufacturing cost.

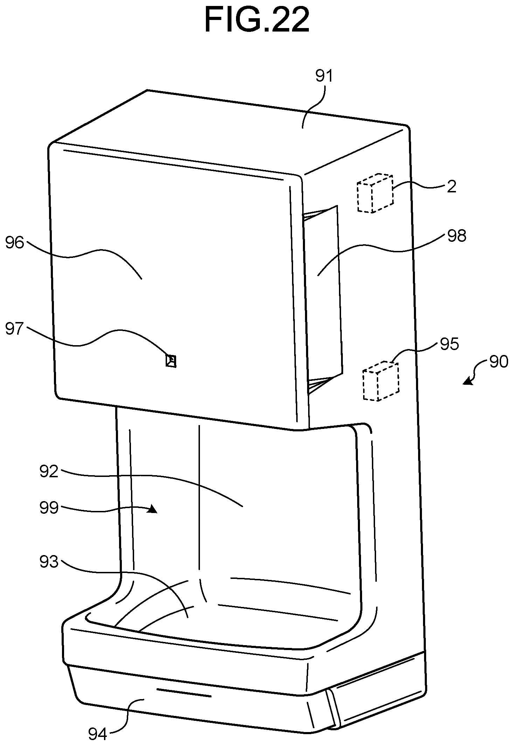

FIG. 22 is a diagram illustrating the configuration of a hand drying machine 90 including the motor driving apparatus 2 according to an embodiment. The hand drying machine 90 includes the motor driving apparatus 2, a casing 91, a hand detection sensor 92, a water tray 93, a drain container 94, a cover 96, a sensor 97, an intake port 98, and an electric blower 95. The sensor 97 is either a gyro sensor or a motion sensor. In the hand drying machine 90, a hand is inserted into a hand insertion portion 99 above the water tray 93, and the water is blown off by air from the electric blower 95. The blown water is collected in the water tray 93, and thereafter stored in the drain container 94.

Similarly to the vacuum cleaner 61 illustrated in FIG. 21, the hand drying machine 90 is a product that provides the motor rotation speed fluctuating from 0 [rpm] to over 100,000 [rpm]. The control method according to the above-described embodiment is therefore, also suitable for the hand drying machine 90, and an effect similar to that of the vacuum cleaner 61 can be obtained.

As described above, the present embodiment has provided the exemplary configurations in which the motor driving apparatus 2 is applied to the vacuum cleaner 61 and the hand drying machine 90, but the present invention is not limited to these examples. The motor driving apparatus 2 can be applied to a wide variety of electrical devices equipped with a motor. Examples of electrical devices equipped with a motor include incinerators, crushers, drying machines, dust collectors, printing machines, cleaning machines, confectionery machines, tea making machines, woodworking machines, plastic extruders, cardboard machines, packaging machines, hot air generators, OA equipment, and electric blowers. An electric blower is a blower means for object transportation, dust attraction, or general-purpose blowing and exhausting.

Note that the configurations described in the above-mentioned embodiment indicate examples of the contents of the present invention. The configurations can be combined with another well-known technique, and some of the configurations can be omitted or changed in a range not departing from the gist of the present invention.

### Reference Signs List

1 motor driving system; 2 motor driving apparatus; 5A, 5B leg; 6A, 6B connection point; 10 battery; 11 inverter; 12 single-phase motor; 12a rotor; 12b stator; 12b1 teeth; 20 voltage sensor; 22, 22A current detection unit; 25 control unit; 31 processor; 32 drive signal generation unit; 33 carrier generation unit; 34 memory; 38, 38A, 38B carrier comparison unit; 38a absolute value computation unit; 38b division unit; 38c, 38d, 38f, 38k multiplication unit; 38e, 38m, 38n addition unit; 38g, 38h comparison unit; 38i, 38j output inversion unit; 42 rotation speed calculation unit; 44 lead angle phase calculation unit; 51, 52, 53, 54 switching element; 51a, 52a, 53a, 54a body diode; 55a, 55b shunt resistor; 61 vacuum cleaner; 62 extension pipe; 63 suction port; 64 electric blower; 65 dust collection chamber; 66 operation unit; 68, 97 sensor; 70a, 70b amplifier circuit; 71a, 71b level shift circuit; 72 combining unit; 73, 74 protection unit; 74a, 74b comparator; 74c OR circuit; 90 hand drying machine; 91 casing; 92 hand detection sensor; 93 water tray; 94 drain container; 95 electric blower; 96 cover; 98 intake port; 99 hand insertion portion.

## Claims

1. A motor driving apparatus comprising:
an inverter comprising a first leg and a second leg connected in parallel to a direct-current power supply, the first leg comprising a first switching element of an upper arm and a second switching element of a lower arm connected in series to each other, the second leg comprising a third switching element of the upper arm and a fourth switching element of the lower arm connected in series to each other, and the inverter converting a direct-current power supplied from the direct-current power supply, into an alternating-current power and supplying the alternating-current power to a single-phase motor;
a first current detection unit detecting current flowing through the first leg;
a second current detection unit detecting current flowing through the second leg; and
a control unit controlling the first to fourth switching elements such that a first time period and a second time period are continuous, a non-pulse current flowing through a detector of the first current detection unit during the first time period, a non-pulse current flowing through a detector of the second current detection unit during the second time period.

2. The motor driving apparatus according to claim 1, wherein
each of the first and second current detection units includes a level shift circuit.

3. The motor driving apparatus according to claim 1 or 2, wherein
the control unit performs control such that at least one of the first to fourth switching elements is in an on state for half a period of motor current flowing through the single-phase motor.

4. The motor driving apparatus according to claim 1 or 2, wherein
the detector of the first current detection unit is disposed between a terminal on a low potential side of the second switching element and a direct-current bus on a low potential side, and
the detector of the second current detection unit is disposed between a terminal on a low potential side of the fourth switching element and the direct-current bus on the low potential side.

5. The motor driving apparatus according to claim 1, 2, or 4, wherein
the control unit controls operation of the first to fourth switching elements on a basis of a result of comparison of a current signal with a set protection threshold, the current signal being obtained by combining a detection signal from the detector of the first current detection unit and a detection signal from the detector of the second current detection unit.

6. The motor driving apparatus according to claim 1, 2, or 4, wherein
the control unit controls operation of the first to fourth switching elements on the basis of a result of comparison of a detection signal from the detector of the first current detection unit with a set protection threshold and a result of comparison of a detection signal from the detector of the second current detection unit with the protection threshold.

7. The motor driving apparatus according to any one of claims 4 to 6, wherein
at least the second and fourth switching elements of the first to fourth switching elements are each formed of a wide bandgap semiconductor.

8. The motor driving apparatus according to claim 7, wherein
the wide bandgap semiconductor is silicon carbide, gallium nitride, or diamond.

9. The motor driving apparatus according to any one of claims 4 to 6, wherein
the second and fourth switching elements have larger current capacities than those of the first and third switching elements.

10. The motor driving apparatus according to any one of claims 4 to 6, wherein
the second and fourth switching elements have smaller on-resistances than those of the first and third switching elements.

11. A vacuum cleaner comprising the motor driving apparatus according to any one of claims 1 to 10.

12. A hand drying machine comprising the motor driving apparatus according to any one of claims 1 to 10.
